# EUROPÄISCHE PATENTSCHRIFT

(11) **EP 0 392 051 B1**
(45) Veröffentlichungstag und Bekanntmachung des Hinweises auf die Patenterteilung: **31.08.1994**
(21) Anmeldenummer: 89106523.7
(22) Anmeldetag: 12.04.1989
(51) Int. Cl.: G21C 5/06, F16B 19/10, F16B 19/12, B21D 39/06

(54) **Verfahren und Anordnung zum Befestigen eines Zentrierstiftes**
Process and arrangement for fastening an alignment pin
Procédé et dispositif pour attacher une broche de centrage

(43) Veröffentlichungstag der Anmeldung: 17.10.1990
(73) Patentinhaber: SIEMENS AKTIENGESELLSCHAFT, 80333 München (DE)
(72) Erfinder: Kunz, Rainer, D-8500 Nürnberg 90 (DE); Landgraf, Tilo, Dipl.-Ing., D-8520 Erlangen (DE); Ropers, Johann, Dipl.-Ing., D-8520 Erlangen (DE); Zenkel, Martin, D-8551 Röttenbach (DE)

(56) Entgegenhaltungen:
- US-A- 4 820 479

## Beschreibung

Die Erfindung bezieht sich auf ein Verfahren zum Befestigen eines zylindrischen Zentrierstiftes für die Zentrierung von Brennelementen und eine Anordnung zur Durchführung des Verfahrens.

Um einen Zentrierstift auf einer Platte eines Reaktorkerngerüstes, beispielsweise auf einer Gitterplatte zu befestigen, ist es bekannt, einen Zentrierstift zu verwenden, der ein mit einer Bund und mit einem Gewinde versehenes Ende aufweist. Der Zentrierstift wird mit dem Gewinde durch eine Bohrung der Platte hindurchgeführt und auf der Rückseite der Platte mit einer Mutter gegen die Schulter festgeschraubt. Bei dieser Ausführung müssen für jeden Zentrierstift zwei Bauelemente auf Lager gehalten werden, die beim Einbau jeweils von einer Seite der Platte aus zusammengeführt werden müssen.

Aus den deutschen Patentschriften 737 480, 689 584 und der internationalen Patentanmeldung W0 85/00856 sind Verfahren und Anordnungen bekannt, die die Befestigung von hohlen Stiften in Bohrungen von Platten zum Gegenstand haben. Diese bekannten Verfahren beziehen sich jedoch nicht auf das Verankern von Zentrierstiften, sondern auf das Verbinden von dünnen Platten mittels Hohlnieten.

Der Erfindung liegt nun die Aufgabe zugrunde, ein Verfahren anzugeben, mit dessen Hilfe ein Zentrierstift für die Zentrierung von Brennelementen in einer vorhandenen Bohrung in kürzerer Zeit als bisher verankert werden kann.

Diese Aufabe wird zum einen gelöst durch ein Verfahren zum Befestigen eines zylindrischen Zentrierstiftes für die Zentrierung von Brennelementen, in einer Bohrung einer Platte, wobei der Zentrierstift an dem zu befestigenden Ende einen mit Druckmittel beaufschlagbaren geschlossenen Hohlraum aufweist, der von einem koaxialen, radial verformbaren Wandteil umgeben ist, mit folgenden Schritten:
a) der Zentrierstift wird mit dem zu befestigenden Ende in die Bohrung der Platte eingeführt, so daß zumindest ein Teil des verformbaren Wandteiles über die Platte hinausragt,
b) in dem geschlossenen Hohlraum wird ein Druck von solcher Größe erzeugt, daß der koaxiale Wandteil aufgeweitet und dadurch der Zentrierstift verankert wird.

Eine zweite erfindungsgemäße Lösung der eingangs gestellten Aufgabe sieht ein Verfahren zum Befestigen eines zylindrischen Zentrierstiftes, insbesondere für die Zentrierung von Brennelementen, in einer Bohrung einer Platte vor, wobei der Zentrierstift an dem zu befestigenden Ende an seinem Umfang und in seinem Inneren mit radialen Schlitzen versehen ist und der Zentrierstift durch radiales Aufweiten des Endes mittels eines Werkzeuges verankerbar ist, mit folgenden Schritten:
a) der Zentrierstift wird mit dem zu befestigenden Ende in die Bohrung der Platte eingeführt, so daß zumindest ein Teil des mit Schlitzen versehenen Endes über die Platte hinausragt und
b) ein dornförmiges Werkzeug wird an den inneren Schlitzen des Zentrierstiftes im Sinne einer Aufweitung des Zentrierstiftes zur Einwirkung gebracht, um den Zentrierstift zu verankern.

Hierbei kann zum Aufweiten das dornförmige Werkzeug vom freien Ende des Zentrierstiftes in eine axiale Bohrung des Zentrierstiftes eingeführt werden. Es braucht nur eine Seite der Platte zugänglich zu sein. Die Anbringung des Zentrierstiftes wird dadurch besonders einfach.

Beiden erfindungsgemäßen Verfahren ist gemein, daß die Montagezeit erheblich reduziert werden kann, da der Zentrierstift als Bauelement auf einfache Weise verankert wird. Dem kommt eine besondere Bedeutung zu, wenn der Zentrierstift in einem Kerngerüst ausgetauscht werden muß, da die Dosisbelastung für das Bedienpersonal gegenüber dem zuvor verwendeten Verfahren merklich reduziert werden kann.

Bei Verwendung eines Zentrierstiftes, der an dem zu befestigenden Ende einen mit Druckmittel beaufschlagbaren, geschlossenen Hohlraum aufweist, ist es günstig, den Druck durch Zünden einer explosiven Ladung mittels eines über elektrische Leitungen verbundenen Zündgerätes zu erzeugen. Dieses Verfahren ermöglicht eine besonders schnelle Verankerung des Zentrierstiftes.

Auch ist es vorteilhaft, den Druck durch Anschließen des Hohlraumes über eine Leitung an einen Druckmittelspeicher zu erzeugen. Dadurch kann eine sehr präzise Dosierung des Druckes erzielt werden.

Das Verfahren kann mit einer Anordnung durchgeführt werden, bei der der zylindrische Zentrierstift an dem einen Ende unter Bildung eines koaxialen, radial verformbaren Wandteiles mit einem geschlossenen Hohlraum versehen ist und dem Hohlraum Mittel zum Aufblähen des hohlen Endes zugeordnet sind, die zum Aufweiten des Wandteiles und damit zur Verankerung des Zentrierstiftes in der Bohrung dienen. Diese Ausgestaltung hat den Vorteil, daß der Zentrierstift einteilig ausgebildet ist und an einer Platte befestigt werden kann, die nur von einer Seite aus zugänglich ist.

Zweckmäßigerweise dient als Mittel zum Aufblähen des hohlen Endes eine explosive Ladung, an die Zündleitungen angeschlossen sind, die durch den Zentrierstift zu an der Außenfläche des Zentrierstiftes angeordnete Elektroden geführt sind. Das Verankern erfolgt dann nur durch Anschließen und Einschalten eines Zündgerätes.

Die Mittel zum Aufblähen des hohlen Endes können auch durch eine an den Hohlraum angeschlossene Druckmittelleitung gebildet sein, die über einen Adapter und ein steuerbares Ventil an einen Druckmittelspeicher, insbesondere Hydraulikspeicher anschließbar ist. Durch diese Ausgestaltung ist ein kontrollierbares Verankern des Zentrierstiftes möglich.

Es ist von Vorteil, wenn durch den Hohlraum in axialer Richtung ein Verbindungssteg führt. Bei einer solchen Anordnung dehnt sich der Zentrierstift bevorzugt in radialer Richtung aus, was zu einer besonders guten Verankerung führt.

Der Hohlraum mit Verbindungssteg kann durch ein axiales Sackloch im Zentrierstift mit darin angeordnetem Kopfbolzen gebildet sein, wobei der Kopf des Kopfbolzens das Sackloch abdeckt und dicht mit dem Wandteil des Sackloches verbunden ist und das andere Ende des Kopfbolzens kraftschlüssig am Boden des Sackloches gehaltert ist. Dadurch ist eine besonders stabile Ausführung des Zentrierstiftes gegeben.

Das erfindungsgemäße Verfahren kann auch mittels einer Anordnung durchgeführt werden, bei der der Zentrierstift an dem zu befestigenden Ende am Umfang und im Inneren mit radialen Schlitzen versehen ist, die in Längsrichtung des Zentrierstiftes verlaufen, wobei die Schlitze am Umfang gegenüber den Schlitzen im Inneren gegeneinander versetzt sind, und die inneren Schlitze einen Ansatz für das dornförmige Werkzeug zum Aufweiten des Endes des Zentrierstiftes bilden. Diese einteilige Anordnung läßt sich einfach herstellen.

An dem einen Ende des Zentrierstiftes kann eine zylindrische Öffnung vorgesehen werden, die einen Sternpunkt der im Inneren befindlichen Schlitze bildet. Diese Ausgestaltung ermöglicht ein besonders gleichmäßiges Aufweiten des Zentrierstiftes.

Es ist von Vorteil, wenn der Zentrierstift eine axiale Bohrung besitzt und die Bohrung im Bereich der Schlitze eine Verengung aufweist. Ein solcher Zentrierstift kann mittels des dornförmigen Werkzeugs, das in die Bohrung eingeführt wird, von seinem freien Ende aus verankert werden.

Eine weitere vorteilhafte Ausgestaltung sieht vor, daß der Zentrierstift an dem zu befestigenden Ende eine radiale Nut aufweist, die in der aufgeweiteten Lage des Zentrierstiftes eine Schulter an der Platte bildet. Damit ist ein Einhaken des Zentrierstiftes hinter der Platte möglich. Dabei kann zumindest eine Flanke der Nut angeschrägt sein. Eine solche Ausgestaltung bietet eine hohe Sicherheit in der Verankerung.

Diese Sicherheit kann gesteigert werden, wenn die Nut zumindest eine sägezahnförmige Flanke aufweist. Ein solcher Zentrierstift kann auch dann eingesetzt werden, wenn die Bohrung oder die Platte Unebenheiten aufweisen. Durch das Einkrallen des Zentrierstiftes hinter der Bohrung wird die Verankerung sehr zuverlässig.

Die Erfindung wird anhand der Zeichnung näher erläutert. Es zeigen:
FIG 1 einen in eine Bohrung einer Platte eingeführten Zentrierstift im Teillängsschnitt,
FIG 2 einen Zentrierstift nach FIG 1 im verankerten Zustand,
FIG 3 eine weitere Ausführung eines Zentrierstiftes im Teillängsschnitt,
FIG 4 einen Zentrierstift mit explosiver Ladung im verankerten Zustand,
FIG 5 einen Zentrierstift in der Außenansicht,
FIG 6 einen Zentrierstift im Teillängsschnitt,
FIG 7 einen Zentrierstift nach FIG 6 im aufgeweiteten Zustand mit darin angeordnetem Werkzeug,
FIG 8 eine Stirnansicht eines Zentrierstiftes nach FIG 6,
FIG 9 eine Seitenansicht eines weiteren Zentrierstiftes und
FIG 10 einen Zentrierstift mit gezahnter Nut.

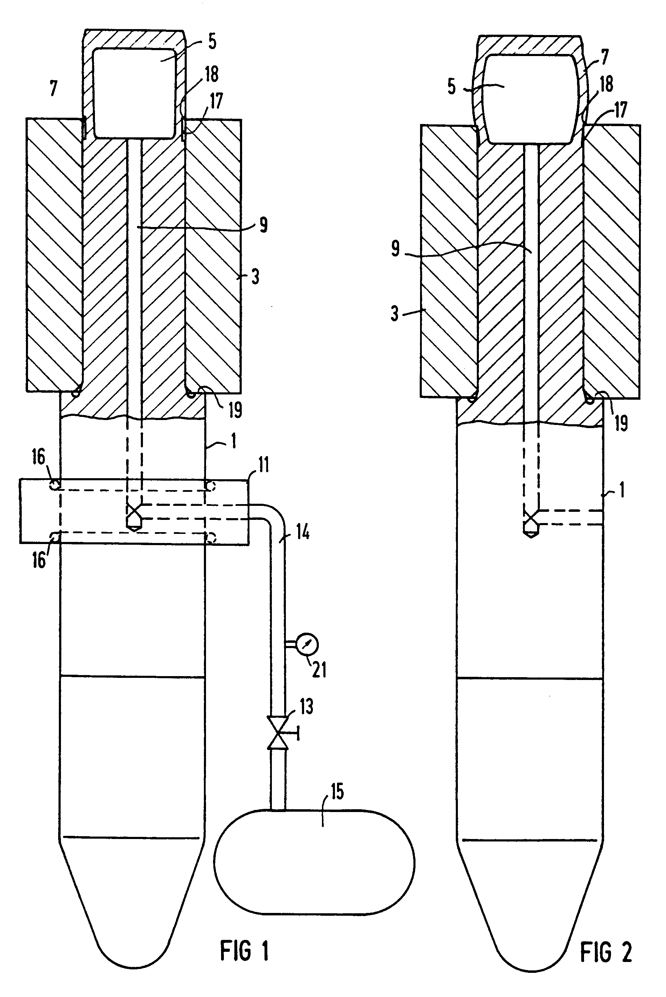

FIG 1 zeigt einen Zentrierstift 1, der in eine Bohrung einer Platte 3 eingeführt ist. Bei dem Zentrierstift 1 kann es sich insbesondere um einen Brennelement-Zentrierstift handeln, der im oberen Kerngerüst eines Druckwasserreaktors, an der den Brennelementen zugewandten Seite einer Gitterplatte angeordnet ist. Die den Brennelementen abgewandte Seite der Gitterplatte ist dabei nur schwer zugänglich.

Der Zentrierstift 1 weist an einen Ende einen Hohlraum 5 auf. Dieser Hohlraum 5 bildet ein koaxiales Wandteil 7 am Ende des Zentrierstites 1. Das Wandteil 7 ist in seiner Dicke derart bemessen, daß es durch einen Druck im Hohlraum 5 verformbar und aufweitbar ist. Um im Hohlraum 5 einen Druck zu erzeugen, sind Mittel zum Aufblähen des hohlen Endes vorgesehen. In diesem Ausführungsbeispiel dient dazu eine Druckmittelleitung 9, die mit ihrem einen Ende an den Hohlraum 5 angeschlossen ist und mit ihrem anderen Ende am freien Ende des Zentrierstiftes 1 herausgeführt ist. Die Druckmittelleitung 9 steht über einen am Zentrierstift 1 angeordneten Adapter 11 und einer weiteren, mit einem steuerbaren Ventil 13 versehenen Druckmittelleitung 14 mit einem Druckmittelspeicher 15 in Verbindung. Der Adapter 11 ist in seinem Inneren ringförmig ausgebildet und weist zur Abdichtung am Zentrierstift 1 zumindest zwei O-Ringe 16 auf.

An dem einen Ende weist der Zentrierstift 1 an seinem Umfang eine radiale Nut 17 auf, die derart am Zentrierstift 1 angeordnet ist, daß die eine Flanke 18 in der aufgeweiteten Lage des Zentrierstiftes 1 eine Schulter an der Rückseite der Platte 3 bildet.

Um den Zentrierstift 1 in der Platte zu befestigen, wird folgendermaßen verfahren: Der Zentrierstift 1 wird mit dem zu befestigenden Ende in die Bohrung der Platte 3 eingeführt, so daß zumindest ein Teil des verformbaren Wandteiles 7 über die Platte 3 hinausragt. Dazu ist es günstig, wenn das freie Ende des Zentrierstiftes 1 einen größeren Durchmesser als der in der Bohrung befindliche Teil des Zentrierstiftes 1 aufweist. Dadurch wird eine Schulter 19 gebildet, die als Anschlag für die Einführtiefe des Zentrierstiftes 1 dient.

Der eingeführte Zentrierstift 1 wird dann mit dem Adapter 11 versehen, so daß der Hohlraum 5 mit dem Druckmittelspeicher 15 in Verbindung gebracht werden kann. Durch Öffnen des steuerbaren Ventils 13 wird anschließend in dem geschlossenen Hohlraum 5 ein Druck von solcher Größe erzeugt, daß der koaxiale Wandteil 7 aufgeweitet und dadurch der Zentrierstift 1 verankert wird. Als Druckmittel ist vorzugsweise Wasser vorgesehen. Auch sind andere geeignete Druckmittel verwendbar. Um den Grad der Aufweitung zu kontrollieren, kann es zweckmäßig sein, eine Druckmeßeinrichtung 21 an die Leitung 9 anzuschließen.

Ist der Wandteil 7 genügend aufgeweitet, so kann die Druckmittelzufuhr durch das Ventil 13 unterbrochen und der Adapter 11 von dem Zentrierstift 1 entfernt werden.

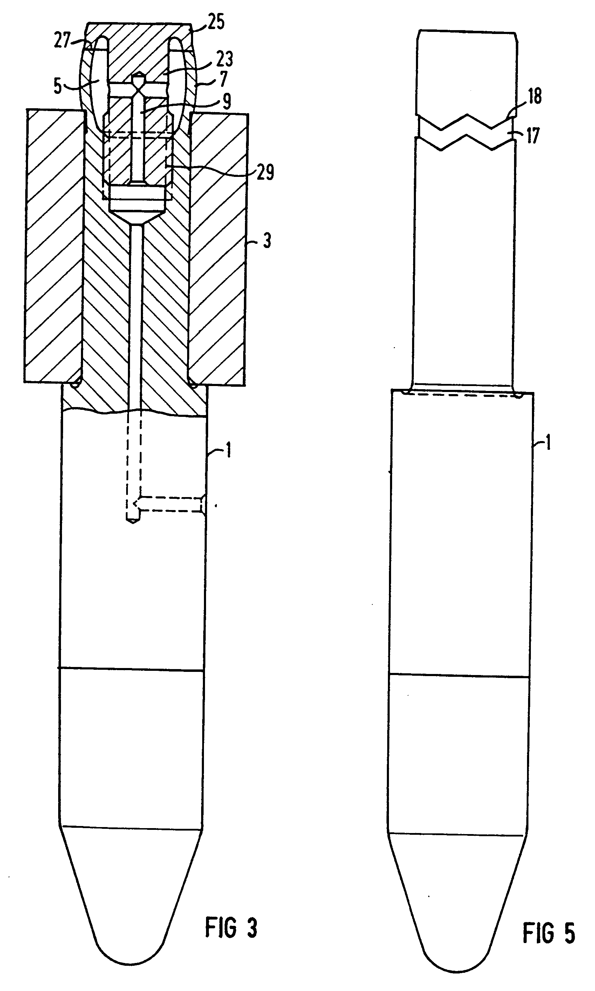

Ein verankerter Zentrierstift 1 ist in FIG 2 gezeigt, bei dem der Wandteil 7 radial aufgeweitet ist. Dabei kommt die eine Flanke 18 der Nut 17 an der Hinterkante der Platte 3 zum Anschlag und bildet dadurch einen Bund. Der Zentrierstift 1 ist dadurch quasi eingehakt.

Bei diesem Verfahren braucht die Rückseite der Platte 3 nicht zugänglich zu sein. Alle Arbeiten können von der Vorderseite durchgeführt werden. Darüber hinaus ist das Verankern sehr schnell durchzuführen, da nur die Verbindung zum Druckmittelspeicher 15 hergestellt werden muß. Darüber hinaus ist ein Entfernen des Zentrierstiftes 1 aus der Bohrung der Platte 3 äußerst einfach. Der Wandteil 7 ist derart bemessen, daß er sich bei einer Zugkraft am Zentrierstift 1 in Richtung des freien Endes wieder zurückbildet. Somit ist auch ein leichter Austausch des Zentrierstiftes 1 gegeben.

FIG 3 zeigt eine weitere mögliche Ausführung des Zentrierstiftes 1. Dabei führt durch den Hohlraum 5 in axialer Richtung ein Verbindungssteg 23. Dieser verbindet die beiden Endflächen des Hohlraumes 5 miteinander. Diese Ausbildung bewirkt, daß durch einen Druck im Hohlraum 5 im wesentlichen eine radiale Ausweitung des Wandteiles 7 gegeben ist. Einerseits sind die Wandflächen des Hohlraumes 5 in axialer Richtung verringert, andererseits sind diese Flächen durch den Verbindungssteg 23 miteinander gehaltert. Dieser Aufbau läßt sich besonders einfach herstellen, wenn der Hohlraum 5 mit Verbindungssteg 23 durch ein axiales Sackloch im Zentrierstift 1 mit darin angeordnetem Kopfbolzen 25 gebildet ist, wobei der Kopf des Kopfbolzens 25 das Sackloch abdeckt und dicht mit dem Wandteil des Sackloches verbunden ist. Dies ist beispielsweise durch eine Schweißnaht 27 gegeben. Auch sind andere Befestigungsmöglichkeiten, beispielsweise Löten, denkbar. Das andere Ende des Kopfbolzens 25 ist kraftschlüssig am Boden des Sackloches gehaltert. Zweckmäßigerweise ist diese Verbindung als Gewinde 29 ausgeführt. Die Druckmittelleitung 9 ist durch den Verbindungssteg 23 geführt. Diese Ausführung des Zentrierstiftes 1 läßt eine Beaufschlagung mit beonders hohem Druck zu.

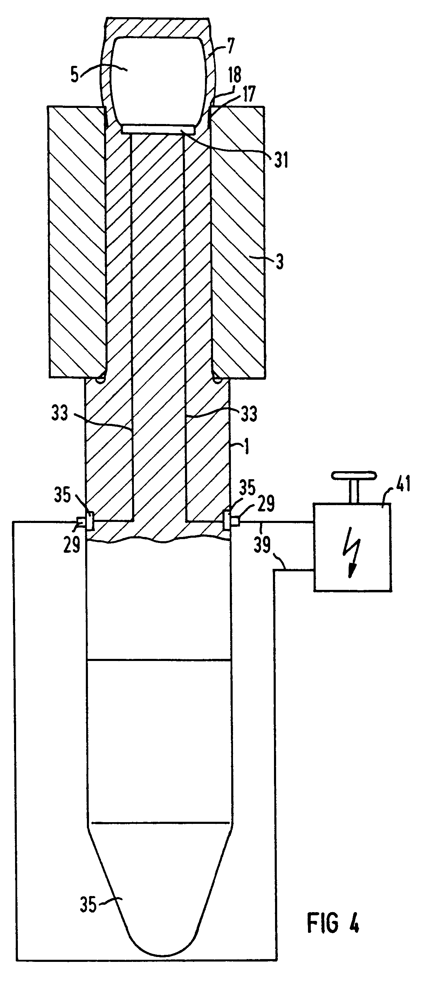

FIG 4 zeigt ein Ausführungsbeispiel eines Zentrierstiftes 1, der bereits in eine Bohrung der Platte 3 verankert ist. Als Mittel zum Aufblähen des hohlen Endes dient eine explosive Ladung 31 an die Zündleitungen 33 angeschlossen sind, die durch den Zentrierstift 1 zu an der Außenfläche des Zentrierstiftes 1 angeordnete Elektroden 35 geführt sind. An diese sind Kontakte 37 geführt, die über elektrische Leitungen 39 mit einem betätigbaren Zündgerät 41 in Verbindung stehen. Die äußere Form des Zentrierstifes 1 entspricht der des in FIG 1 beschriebenen Zentrierstiftes. Dabei weist der Zentrierstift 1 an seinem freien Ende eine verjüngte Spitze 43 auf, wodurch das spätere Einführen des Zentrierstiftes 1 in die Brennelemente vereinfacht wird. Darüber hinaus ist die eine Flanke 18 der Nut 17 angeschrägt. Dadurch ist ein verbesserter Hintergriff in der aufgeweiteten Lage des Zentrierstiftes 1 gegeben.

Um den Zentrierstift zu befestigen, wird wie folgt verfahren: Der Zentrierstift 1 wird zunächst in die Bohrung der Platte 3, wie bereits oben beschrieben, eingeführt. Nach Anschließen der Kontakte 37 an die Elektroden 35 wird mittels des Zündgerätes 41 die explosive Ladung 31 gezündet. Der Zentrierstift 1 wird schlagartig verankert.

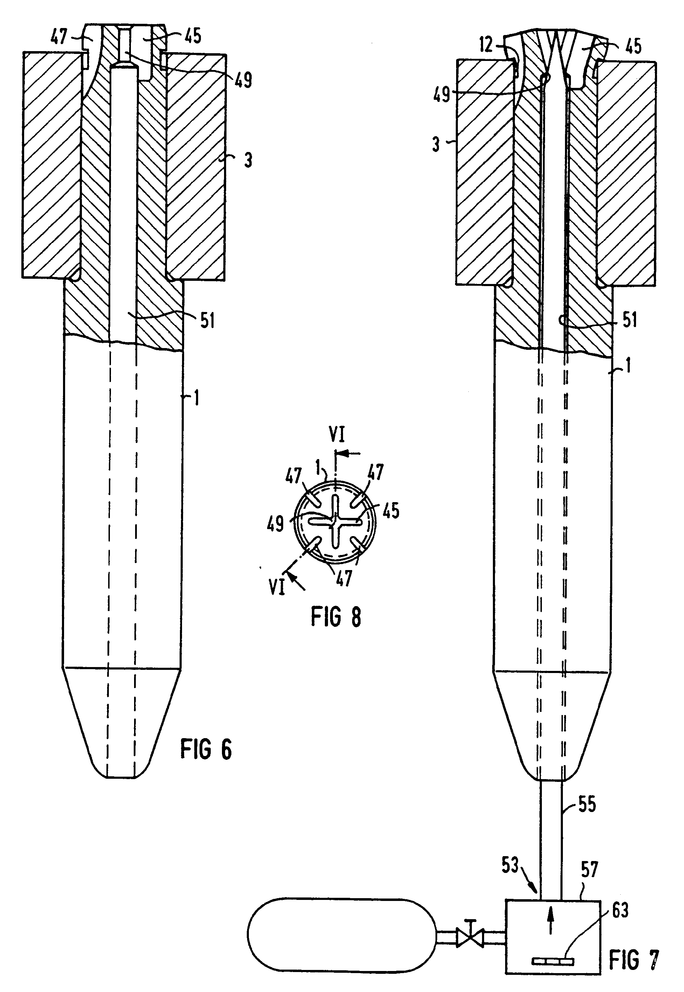

FIG 5 zeigt eine weitere Ausbildung eines Zentrierstiftes 1 von der Außenansicht. Die Nut 17 weist dabei zumindest eine sägezahnförmige Flanke 18 auf. Dies ist zweckmäßig, wenn der Zentrierstift 1 in eine Bohrung eingeführt wird, die unter Umständen an ihrem Rand Unebenheiten aufweist. Durch das verformbare Material des Zentrierstiftes 1 erfolgt ein Verkrallen und Einkerben der zahnförmigen Flanke 18 in den Rand der Bohrung, wodurch eine besonders gute Sicherung des Zentrierstiftes 1 gegeben ist. Darüber hinaus ist dadurch ein Festsetzen des Zentrierstiftes 1 gegeben, falls das Spiel zwischen dem Zentrierstift 1 und der Bohrung in der Platte 3 geringfügig zu groß ist.

Fig 6 zeigt ein anderes Ausführungsbeispiel des Zentrierstiftes 1. Um diesen Zentrierstift 1 in der Bohrung der Platte 3 zu verankern, ist der Zentrierstift 1 an dem zu befestigenden Ende am Umfang und im Inneren mit radialen Schlitzen 45, 47 versehen, die in Längsrichtung des Zentrierstiftes 1 verlaufen. Die inneren Schlitze 45 sind gegenüber den äußeren Schlitzen 47 versetzt angeordnet, wobei die inneren Schlitze 45 einen Ansatz für ein dornförmiges Werkzeug zum Aufweiten des Endes bilden. Dies ist beispielsweise durch eine sternförmige Anordnung der inneren Schlitze 45 möglich.

Die Anordnung der Schlitze 45, 47 ist aus der FIG 8 zu ersehen. Darin ist eine Stirnansicht des zu befestigenden Endes gezeigt. Vorzugsweise sind jeweils vier Schlitze 45, 47 vorgesehen. Jedoch ist auch eine andere Anzahl möglich. Um den Ansatz für das dornförmige Werkzeug zu bilden, sollten die inneren Schlitze 45 sternförmig angeordnet sein. Dabei kann der Sternpunkt von einer zylindrischen Öffnung 49 gebildet sein. Durch das Aufweiten des Endes entsteht eine Auffächerung im Bereich der Schlitze 45, 47.

In FIG 6 sind die Schlitze 45, 47, sowie die zylindrische Öffnung 49 im Längsschnitt zu sehen. Der Zentrierstift 1 besitzt dabei eine axiale Bohrung 51, die mit der zylindrischen Öffnung 49 in Verbindung steht. Dabei bildet die zylindrische Öffnung 49 in axialer Richtung von der axialen Bohrung 51 aus gesehen eine Verengung. Durch die axiale Bohrung 51 ist das aufzuweitende Ende des Zentrierstiftes 1 auch vom freien Ende her zugänglich. Der Zentrierstift 1 kann also wahlweise von beiden Enden her verankert werden.

In FIG 7 ist der aus FIG 6 gezeigte Zentrierstift 1 zu sehen, bei dem mittels des Werkzeuges 53 das eine Ende aufgeweitet ist. Das Werkzeug 53 besteht im wesentlichen aus einer dornförmigen Stange 55 und einem der Stange 55 zugeordneten Antrieb 57 für den axialen Vorschub, der über eine Leitung 59 mit einem Druckmittelspeicher 61 in Verbindung steht. Am Antrieb 57 sind Betätigungselemente 63 vorgesehen.

Zum Verankern dieses Zentrierstiftes 1 wird wie folgt vorgegangen: Der Zentrierstift 1 wird zunächst, wie bereits oben beschrieben, in die Bohrung der Platte 3 eingeführt, so daß zumindest ein Teil des mit Schlitzen versehenen Endes über die Platte 3 hinausragt. Das dornförmige Werkzeug 53 wird an den inneren Schlitzen 45 im Sinne einer Aufweitung des Endes des Zentrierstiftes 1 zur Einwirkung gebracht. Dies geschieht, indem die Stange 55 des Werkzeuges 57 in die axiale Bohrung 51 des Zentrierstiftes 1 vom freie Ende her eingeführt wird. Durch Betätigen des Antriebes 57 wird die Stange 55 mit ihrem angespitzen Ende in die von der Öffnung 49 gebildete Verengung eingepreßt. Durch diesen Vorgang wird das geschlitzte Ende des Zentrierstiftes 1 aufgeweitet, wodurch der Zentrierstift 1 verankert wird. Nach dem Aufweiten wird die Stange 55 des Werkzeuges 53 aus der axialen Bohrung 51 wieder entfernt. Auch in diesem Beispiel bildet die radiale Nut 17 einen Bund zum Hintergriff an der Platte 3.

Die Stange 55 des dornförmigen Werkzeuges 53 kann auch als Dübel verwendet werden, der nach dem Aufweiten im Zentrierstift 1 verbleibt und gegen Herausfallen gesichert wird.

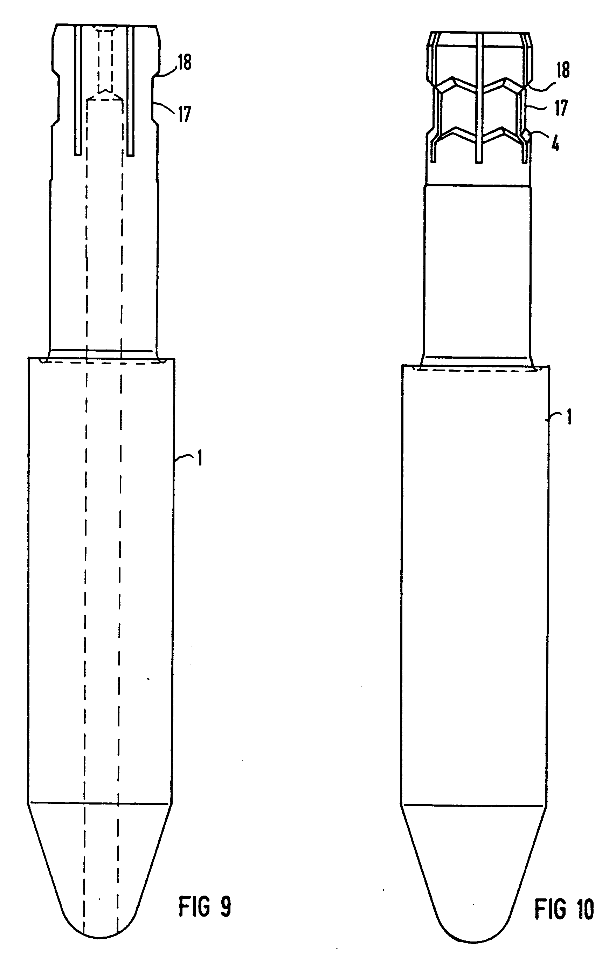

FIG 9 zeigt diese Ausführung des Zentrierstiftes 1 von der Außenansicht. Er ist an dem zu verankerndem Ende mit der Nut 17 versehen, welche zumindest eine angeschrägte Flanke 18 aufweist.

FIG 10 zeigt ein weiteres Ausführungsbeispiel des Zentrierstiftes 1, bei dem die Nut 17 mit sägezahnförmigen Flanken 18 versehen ist. Diese Ausbildung ermöglicht ein besonders gutes Sichern des Zentrierstiftes 1 in einer Bohrung, wie bereits zu FIG 5 beschrieben.

Allen obengenannten Verfahren ist gemein, daß die Montagezeit gegenüber den herkömmlichen Methoden erheblich reduziert werden kann, da der Zentrierstift 1 als Bauelement, insbesondere als einteiliges Bauelement auf einfache Weise verankert wird. Dies ist besonders wichtig, wenn der Zentrierstift in strahlenden Bereichen ausgewechselt werden muß, da die Dosisbelastung für das Bedienpersonal mit dem neuen Verfahren merklich verkleinert werden kann.

## Patentansprüche

1. Verfahren zum Befestigen eines zylindrischen Zentrierstiftes (1) für die Zentrierung von Brennelementen in einer Bohrung einer Platte (3), wobei der Zentrierstift (1) an dem zu befestigenden Ende einen mit Druckmittel beaufschlagbaren geschlossenen Hohlraum (5) aufweist, der von einem koaxialen, radial verformbaren Wandteil (7) umgeben ist, mit folgenden Schritten:
a) der Zentrierstift (1) wird mit dem zu befestigenden Ende in die Bohrung der Platte (3) eingeführt, so daß zumindest ein Teil des verformbaren Wandteiles (7) über die Platte (3) hinausragt und
b) in dem geschlossenen Hohlraum (5) wird ein Druck von solcher Größe erzeugt, daß der koaxiale Wandteil (7) radial aufgeweitet und dadurch der Zentrierstift (1) verankert wird.

2. Verfahren zum Befestigen eines zylindrischen Zentrierstiftes (1) für die Zentrierung von Brennelementen, in einer Bohrung einer Platte (3), wobei der Zentrierstift an dem zu befestigenden Ende an seinem Umfang und in seinem Inneren mit radialen Schlitzen (45, 47) versehen ist und der Zentrierstift (1) durch radiales Aufweiten des Endes mittels eines Werkzeuges (53) verankerbar ist, mit folgenden Schritten:
a) der Zentrierstift (1) wird mit dem zu befestigenden Ende in die Bohrung der Platte (3) eingeführt, so daß zumindest ein Teil des mit Schlitzen (45, 47) versehenen Endes über die Platte (3) hinausragt und
b) ein dornförmiges Werkzeug (53) wird an den inneren Schlitzen (45) im Sinne einer Aufweitung des Endes des Zentrierstiftes (1) zur Einwirkung gebracht, um den Zentrierstift (1) zu verankern.

3. Verfahren nach Anspruch 2, bei dem zum Aufweiten das dornförmige Werkzeug (53) vom freien Ende des Zentrierstiftes (1) in eine axiale Bohrung des Zentrierstiftes eingeführt wird.

4. Verfahren nach Anspruch 1, bei dem der Druck durch Zünden einer explosiven Ladung (31) mittels eines über elektrische Leitungen (39) verbundenen Zündgerätes (41) erzeugt wird.

5. Verfahren nach Anspruch 1, bei dem der Druck durch Anschliessen des Hohlraumes (5) über eine Leitung an einen Druckmittelspeicher (15) erzeugt wird.

6. Anordnung zur Durchführung des Verfahrens nach einem der Ansprüche 1, 4 oder 5, bei der der zylindrische Zentrierstift (1) an dem einen Ende unter Bildung eines koaxialen, radial verformbaren Wandteiles (7) mit einem geschlossenen Hohlraum (5) versehen ist, und dem Hohlraum (5) Mittel zum Aufblähen des hohlen Endes zugeordnet sind, die zum Aufweiten des Wandteiles (7) und damit zur Verankerung des Zentrierstiftes (1) in der Bohrung dienen.

7. Anordnung nach Anspruch 6, bei der als Mittel zum Aufblähen des hohlen Endes eine explosive Ladung (31) dient, an die Zündleitungen (33) angeschlossen sind, die durch den Zentrierstift (1) zu an der Außenfläche des Zentrierstiftes (1) angeordneten Elektroden (35) geführt sind.

8. Anordnung nach Anspruch 6, bei der die Mittel zum Aufblähen des hohlen Endes durch eine an den Hohlraum (5) angeschlossene Druckmittelleitung (9) gebildet sind, die über einen Adapter (11) und ein steuerbares Ventil (13) an einen Druckmittelspeicher (15) insbesondere Hydraulikspeicher, anschließbar ist.

9. Anordnung nach einem der Ansprüche 6 bis 8, bei der durch den Hohlraum (5) in axialer Richtung ein Verbindungssteg (23) führt.

10. Anordnung nach Anspruch 9, bei der der Hohlraum (5) mit Verbindungssteg (23) durch ein axiales Sackloch im Zentrierstift (1) mit darin angeordnetem Kopfbolzen (25) gebildet ist, wobei der Kopf des Kopfbolzens (25) das Sackloch abdeckt und dicht mit dem Wandteil (7) des Sackloches verbunden ist und das andere Ende des Kopfbolzens (25) kraftschlüssig am Boden des Sackloches gehaltert ist.

11. Anordnung zur Durchführung des Verfahrens nach Anspruch 2 oder 3, bei dem der Zentrierstift (1) an dem zu befestigenden Ende am Umfang und im Inneren mit radialen Schlitzen (45, 47) versehen ist, die in Längsrichtung des Zentrierstiftes (1) verlaufen und daß die Schlitze (47) am Umfang gegenüber den Schlitzen (45) im Inneren gegeneinander versetzt sind, und die inneren Schlitze (45) einen Ansatz für das dornförmige Werkzeug (53) zum Aufweiten des Endes des Zentrierstiftes (1) bilden.

12. Anordnung nach Anspruch 11, bei der an dem zu befestigendem Ende eine zylindrische Öffnung (49) vorgesehen ist, die einen Sternpunkt der inneren Schlitze (45) bildet.

13. Anordnung nach Anspruch 11 oder 12, bei der der Zentrierstift (1) eine axiale Bohrung (51) besitzt und die Bohrung (51) im Bereich der Schlitze (45, 47) eine Verengung aufweist.

14. Anordnung nach Anspruch 13, bei der die Verengung von der zylindrischen Öffnung (49) gebildet ist.

15. Anordnung nach einem der Ansprüche 6 bis 10 oder 11 bis 14, bei der der Zentrierstift (1) an dem zu befestigenden Ende eine radiale Nut (17) aufweist, die in der aufgeweiteren Lage des Zentrierstiftes (1) eine Schulter (19) an der Platte (3) bildet.

16. Anordnung nach Anspruch 15, bei der zumindest eine Flanke (18) der Nut (17) angeschrägt ist.

17. Anordnung nach Anspruch 15 oder 16, bei der die Nut (17) zumindest eine sägezahnförmige Flanke (18) aufweist.

18. Anordnung nach einem der Ansprüche 11 bis 17, bei der eine Stange 55 des dornförmigen Werkzeuges 53 als Dübel im Zentriefstift 1 verbleibt.

## Claims

1. A method of securing a cylindrical centring pin (1) for centring fuel elements in a bore in a plate (3), the end of the centring pin (1) for securing being formed with a closed cavity (5) for supplying with pressure medium and surrounded by a coaxial, radially deformable wall part (7), the steps in the method being as follows:
a) the aforementioned end of the centring pin (1) is inserted into the bore in the plate (3) so that at least a part of the deformable wall part (7) projects beyond the plate (3), and
b) a pressure is generated in the closed cavity (5), sufficient for radially expanding the coaxial wall part (7) and thus anchoring the centring pin (1).

2. A method of securing a cylindrical centring pin (1) for centring fuel elements in a bore in a plate (3), the end of the centring pin for securing being formed with peripheral and internal radial slots (45, 47) and the centring pin (1) being anchored by radially expanding its end, using a tool (53), the steps of the method being as follows:
a) the aforementioned end of the centring pin (1) is inserted into the bore in the plate (3) so that at least a part of the end formed with slots (45, 47) projects beyond the plate (3) and
b) a mandrel-like tool (53) is brought to bear on the inner slots (45) so as to expand the end of the centring pin (1) and thus anchor it.

3. A method according to claim 2, in which, for the purpose of expanding, the mandrel-like tool (53) is inserted through the projecting end of the centring pin (1) into an axial bore therein.

4. A method according to claim 1, in which the pressure is generated by igniting an explosive charge (31), using an ignition device (41) connected by electric leads (39).

5. A method according to claim 1, in which the pressure is generated by connecting the cavity (5) by a line to a pressure-medium accumulator (15).

6. An arrangement for working the method according to any of claims 1, 4 or 5, in which one end of the cylindrical centring pin (1) is provided with a closed cavity (5) forming a coaxial, radially deformable wall part (7), and means for inflating the hollow end are associated with the cavity (5) and are used to expand the wall part (7) and thus anchor the centring pin (1) in the bore.

7. An arrangement according to claim 6, in which the means for inflating the hollow end is an explosive charge (31) connected to ignition leads (33) guided through the centring pin (1) to electrodes (35) disposed on the outer surface of the centring pin (1).

8. An arrangement according to claim 6, in which the means for inflating the hollow end comprise a pressure-medium pipe (9) connected to the cavity (5) and connectable via an adapter (11) and controllable valve (13) to a pressure-medium accumulator (15), more particularly a hydraulic accumulator.

9. An arrangement according to any of claims 6 to 8, in which a connecting web (23) leads through the cavity (5) in the axial direction.

10. An arrangement according to claim 9, in which the cavity (5) and connecting web (23) are formed by an axial blind bore containing locking bolts (25) in the centring pin (1), the head of the lock bolt (25) covering the blind bore and being connected in sealing-tight manner to the wall part (7) of the blind bore, whereas the other end of the lock bolt (25) is positively secured to the bottom of the blind bore.

11. An arrangement for working the method according to claim 2 or 3, in which the end of the centring pin (1) for securing is formed with peripheral and internal radial slots (45, 47) which extend in the longitudinal direction of the centring pin (1), and the peripheral slots (47) are offset relative to the inner slots (45), and the inner slots (45) have an attachment for the mandrel-like tool (53) for expanding the end of the centring pin (1).

12. An arrangement according to claim 11, in which a cylindrical opening (49) is formed on the end for securing and constitutes a centre point for the inner slots (45).

13. An arrangement according to claim 11 or 12, in which the centring pin (1) has an axial bore (51), and the bore (51) has a constriction in the neighbourhood of the slots (45, 47).

14. An arrangement according to claim 13, in which the constriction is formed by the cylindrical opening (49).

15. An arrangement according to any of claims 6 to 10 or 11 to 14, in which the end of the centring pin (1) for securing has a radial groove (17) which forms a shoulder (19) on the plate (3) when the centring pin (1) is in the expanded position.

16. An arrangement according to claim 15, in which at least one side (18) of the groove (17) is bevelled.

17. An arrangement according to claim 15 or 16, in which the groove (17) has at least one sawtooth-like flank (18).

18. An arrangement according to any of claims 11 to 17, in which a rod (55) on the mandrel-like tool (53) remains as a dowel in the centring pin (1).

## Revendications

1. Procédé pour fixer une broche cylindrique de centrage (1) pour le centrage d'éléments combustibles dans un perçage d'une plaque (3), la broche de centrage (1) possédant, au niveau de l'extrémité devant être fixée, une cavité fermée (5), pouvant être chargée par un fluide sous pression et qui est entourée par un élément de paroi coaxial (7) déformable radialement, comprenant les étapes suivantes :
a) on introduit la broche de centrage (1) par l'extrémité devant être fixée, dans le perçage de la plaque (3) de sorte qu'au moins une partie de l'élément de paroi déformable (7) fait saillie au-dessus de la plaque (3), et
b) dans la cavité fermée (5) on établit une pression telle que l'élément de paroi coaxial (7) est élargi radialement et que de ce fait, la broche de centrage (1) est ancrée.

2. Procédé pour fixer une broche cylindrique de centrage (1) pour le centrage d'éléments combustibles dans un perçage d'une plaque (3), la broche de centrage étant pourvue de fentes radiales (45, 47) sur l'extrémité devant être fixée, au niveau de sa périphérie et en son intérieur et la broche de centrage (1) est ancrée par élargissement radial de l'extrémité à l'aide d'un outil (53), comprenant les étapes suivantes :
a) on introduit la broche de centrage (1) par l'extrémité devant être fixée dans le perçage de la plaque (3) de manière qu'au moins une partie de l'extrémité pourvue de fentes (45, 47) fasse saillie au-dessus de la plaque (3), et
b) on fait agir un outil en forme de mandrin (53) au niveau des fentes intérieures (45) dans le sens d'un élargissement de l'extrémité de la broche de centrage (1), pour ancrer cette dernière.

3. Procédé suivant la revendication 2, selon lequel, pour l'élargissement, on introduit l'outil en forme de mandrin (53) à partir de l'extrémité libre de la broche de centrage (1), dans un perçage axial de la broche.

4. Procédé suivant la revendication 1, dans lequel la pression est produite par amorçage d'une charge explosive (31) au moyen d'un dispositif d'amorçage (41) relié par l'intermédiaire de conducteurs électriques (39).

5. Procédé suivant la revendication 1, selon lequel la pression est produite par raccordement de la cavité (5) à un accumulateur (15) d'un fluide sous pression, par l'intermédiaire d'une canalisation.

6. Dispositif pour la mise en oeuvre du procédé suivant l'une des revendications 1, 4 ou 5, dans lequel la broche cylindrique de centrage (1) comporte, à une extrémité, une cavité fermée (5), moyennant la formation d'un élément de paroi coaxial (7) déformable radialement, et qu'à la cavité (5) sont associés, pour gonfler l'extrémité creuse, des moyens qui servent à élargir l'élément de paroi (7) et par conséquent à ancrer la broche de centrage (1) dans le perçage.

7. Dispositif suivant la revendication 6, dans lequel on utilise comme moyens pour gonfler l'extrémité creuse, une charge explosive (31), à laquelle sont raccordées des conducteurs d'amorçage (33), qui sont guidées par la broche de centrage (1) jusqu'aux électrodes (35) disposées sur la surface extérieure de la broche de centrage (1).

8. Dispositif suivant la revendication 6, dans lequel les moyens pour réaliser le gonflement de l'extrémité creuse sont formés par une canalisation (9) du fluide sous pression, qui est raccordée à la cavité (5) et qui peut être raccordée, au moyen d'un adaptateur (11) et d'une soupape hydraulique (13), à un accumulateur de fluide sous pression (15), notamment un accumulateur hydraulique.

9. Dispositif suivant l'une des revendications 6 à 8, dans lequel une barrette de liaison (23) traverse la cavité (5) dans la direction axiale.

10. Dispositif suivant la revendication 9, dans lequel la cavité (5) est pourvue d'une barrette de liaison (23) grâce à la présence d'un trou borgne présent dans la broche de centrage (1) et dans lequel est disposé un boulon à tête (25), la tête du boulon (25) fermant le trou borgne et étant reliée d'une manière étanche à l'élément de paroi (7) du trou borgne, tandis que l'autre extrémité du boulon à tête (25) est retenue selon une liaison de force dans le fond du trou borgne.

11. Dispositif pour la mise en oeuvre du procédé suivant la revendication 2 ou 3, dans lequel la broche de centrage (1) comporte, au niveau de l'extrémité à fixer, sur la périphérie et intérieurement, des fentes radiales (45, 47), qui s'étendent dans la direction longitudinale de la broche de centrage (1), et que les fentes (47) sont décalées par rapport aux fentes (45) sur la périphérie, et l'une par rapport aux autres, sur le côté intérieur, et que les fentes intérieures (45) forment une butée pour l'outil en forme de mandrin (53) utilisé pour l'élargissement de l'extrémité de la broche de centrage (1).

12. Dispositif suivant la revendication 11, dans lequel dans l'extrémité à fixer est prévue une ouverture cylindrique (49), qui forme un centre de l'étoile constituée par les fentes intérieures (45).

13. Dispositif suivant la revendication 11 ou 12, dans lequel la broche de centrage (1) possède un perçage axial (51) et le perçage (51) possède une partie rétrécie, dans la zone des fentes (45, 47).

14. Dispositif suivant la revendication 13, dans lequel le rétrécissement est formé par l'ouverture cylindrique (49).

15. Dispositif suivant l'une des revendications 6 à 10 ou 11 à 14, dans lequel la broche de centrage (1) possède, sur l'extrémité à fixer, une rainure radiale (17), qui, lorsque la broche de centrage (1) est dans son état élargi, forme un épaulement (19) sur la plaque (3).

16. Dispositif suivant la revendication 15, dans lequel au moins un flanc (18) de la rainure (17) est biseauté.

17. Dispositif suivant la revendication 15 ou 16, dans lequel la rainure (17) possède au moins un flanc ayant une forme en dents de scie (18).

18. Dispositif suivant l'une des revendications 11 à 17, dans lequel une barre (55) de l'outil en forme de mandrin (53) subsiste en tant que cheville dans la broche de centrage (1).
